# EUROPEAN PATENT SPECIFICATION

(11) **EP 0 442 874 B1**
(45) Date of publication and mention of the grant of the patent: **10.08.1994**
(21) Application number: 89904273.3
(22) Date of filing: 13.02.1989
(51) Int. Cl.: B60P 3/035, B60S 13/00

(54) **A CARRIAGE FOR TRANSFERRING OBJECTS**
WAGEN ZUM TRANSPORT VON GEGENSTÄNDEN
CHARIOT SERVANT AU TRANSPORT D'OBJETS

(30) Priority: 30.05.1988 SE 8802007
(43) Date of publication of application: 28.08.1991
(73) Proprietor: HELLSTRÖM, Nils Erik, S-870 52 Nyland (SE)
(72) Inventor: HELLSTRÖM, Nils Erik, S-870 52 Nyland (SE)
(74) Representative: Bjerkén, Jarl Hakan
(86) International application number: SE8900060
(87) International publication number: WO8911983

(56) References cited:
- WO-A-97/06542
- DE-A- 3 133 465
- SE-B- 453 814
- US-A- 2 362 981
- US-A- 2 452 481
- US-A- 4 692 082

## Description

### FIELD OF INVENTION AND PRIOR ART

This invention is related to a steerable carriage for transferring round objects, comprising a device for establishing a propulsion force transmitting engagement between the carriage and the object. The object is primarily intended to be formed by a wheel of a vehicle, transfer of the wheel secured to the vehicle also giving rise to transfer of the vehicle. The term vehicle refers primarily to passenger cars but also to other vehicles, such as lorries, buses, trailers etc.

It is a difficult problem to transfer vehicles in premises for e.g. sale and repair of vehicles. The combustion engines of the vehicles cause emission of exhaust gases hazardous to the health and cannot therefore be used for transferring the vehicles unless specific devices are provided. Such devices comprise normally hoses connectable to the exhaust system of the vehicles, the exhaust gases being transported to the surroundings exteriorly of the premises via said hoses. However, these devices require very big investments and are principally used in large work shop premises, where it is required to allow the engines to run also during other time than during the transfer of the vehicles. Such exhaust gas evacuating devices are not applicable in car sale premises and the like due to the high investments and also due to aesthetical considerations. In order to avoid spreading of exhaust gases in car sale premises, one therefore presently tries to avoid as far as possible to have the engines running and transferring of the cars occurs manually. With other words, the car dealer has to, often assisted by the customer, pull and push respectively the car out of and into the premises when the customer wishes to make a test run. This work is extremely laborious and time consuming. Since the person having to steer the vehicle during the transfer carries out such steering through the door opening at the same time as he is pushing the vehicle, the control of the vehicle during the transfer is deficient. Accordingly, there is a considerable risk for injuries and damage of other persons and cars present in the premises.

A number of various embodiments of steerable carriages for transferring vehicles are previously known per se. Rescue vehicles, wreckers and the like may be mentioned as examples. However, the latter are not intended for the field of use primarily intended in this case, namely transfer of vehicles located indoors.

A device of the type described in the preamble of claim 1 is known e.g. from DE-A-3 133 465 or US-A-2 362 981.

### SUMMARY OF THE INVENTION

The object of the present invention is to provide a steerable carriage suitable for transferring objects and in particular vehicles, specifically indoors in e.g. car sale premises or the like, said carriage having light weight and being readily operable for placing the vehicles relatively close side by side and at the same time the carriage should enable a good control of the vehicle during the transfer. However, it is also intended that the carriage should be suitable for transfer of other objects than vehicles.

This object is primarily obtained in accordance with the invention by the features of the characterizing part of claim 1. By designing the carriage in this way a very simple arrangement for obtaining elevation of the object or the vehicle wheel is obtained.

A relatively small power requirement for the elevation is obtained due to the inclined surface of the support member.

Other advantageous embodiments of the carriage appear from the rest of the dependent claims.

### BRIEF DESCRIPTION OF THE DRAWINGS

With reference to the enclosed drawings a more specific description of embodiment examples of the invention will follow hereinbelow.

In the drawings:
Fig 1 is a diagrammatical, partly cut view of the carriage according to the invention illustrated in a side view, a part of a vehicle being indicated with dashed lines;
Fig 2 is a plan view of the carriage according to claim 1;
Fig 3 is a plan view of a slightly modified carriage;
Fig 4 is a side view of a carriage for transferring round objects in the form of e.g. paper rolls;
Fig 5 is a plan view of the carriage according to Fig 4;
Fig 6 is a side view of a variant of the embodiment according to Fig 4;
Fig 7 is a plan view of the carriage according to Fig 6; and
Fig 8 is a section along the line VIII-VIII in Fig 6.

### DETAILED DESCRIPTION OF PREFERRED EMBODIMENTS

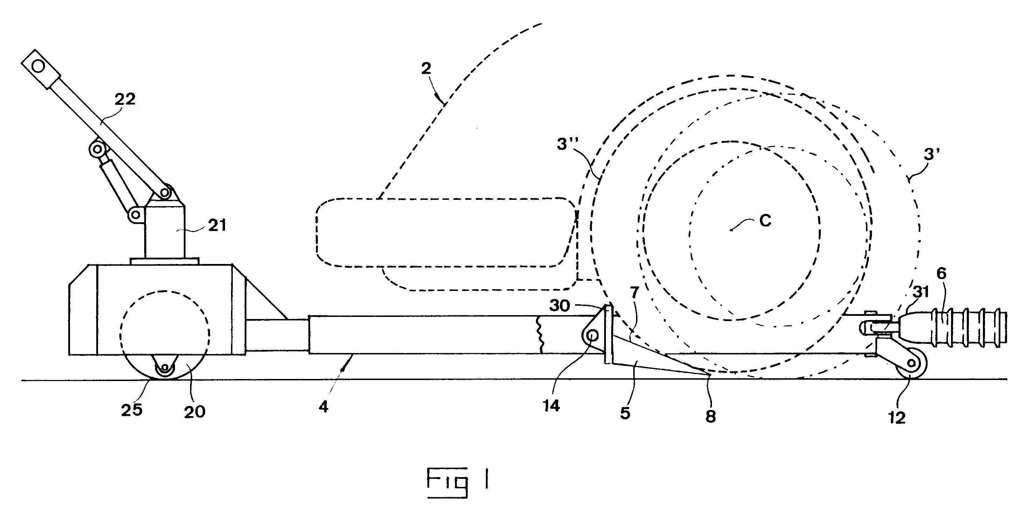

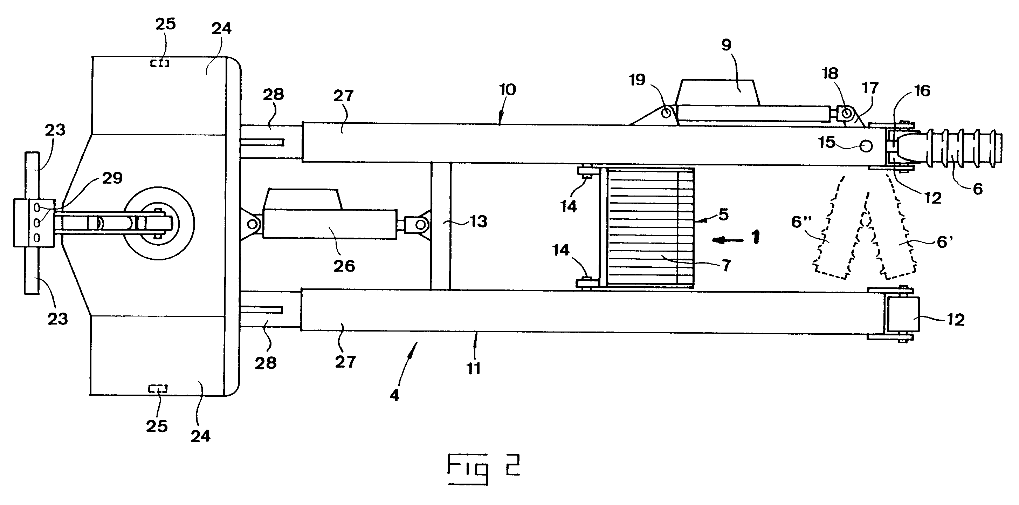

The carriage according to Figs 1 and 2 comprises an engagement device generally denoted 1 for establishing a propulsion force transmitting engagement between the vehicle and the car 2 indicated with dashed lines. More specifically, the engagement device 1 is adapted to engage with and elevate a steerable wheel 3, i.e. normally a front wheel, of the car from the ground. Furthermore, the carriage is adapted to transmit propulsion force, on transfer of the carriage, to the car 2 via the engagement device 1 and via said wheel 3. The carriage and its wheel engagement device 1 are adapted to leave the other wheels of the car free from direct actuation and free to roll against the ground in question during the transfer.

The engagement device 1 provided on the chassis 4 of the carriage comprises a support member 5 and an actuating member 6 movably arranged on the chassis, said actuating member being adapted to cause the wheel 3 and support member 5, by acting on the wheel, to assume such a relative position, in which the wheel 3 is at least partially located on the support member 5 and at least partly supported thereby. The support member 5 has an upper surface 7, which is intended to contact the wheel and which from a place 8 relatively close to the ground slopes upwardly. The support surface 7 forms an inclined plane.

The actuating member 6 is adapted to actuate wheel 3 so that the latter and the support member 5 move mutually whereas the wheel is effected upwardly out of contact with the ground by the inclined surface 7. In Fig 1 the wheel is indicated with the designation 3' and with dash dotted lines in a position resting on the ground whereas the wheel with the designation 3'' and dashed lines is indicated to be elevated on the inclined surface 7 of support member 5.

The actuating member 6 is adapted to prevent wheel 3 from leaving its position on support member 5 during transfer of the carriage. As will be discussed more closely hereinafter, it is suitable that the actuating member 6 is formed by a rotatably journalled roller and furthermore, it is suitable that the actuating member is pivotably journalled on the chassis 4 of the carriage.

The actuating member 6 is by means of a power member 9, which preferably is of a type variable in length, movable from an inactive position appearing with solid lines in Fig 2 and also from Fig 1, in which the actuating member allows the wheel 3 and support member 5 to be located close to each other with the peripherical surface of the wheel adjacent to the support member, to an active area of movement, in which two possible positions are indicated in Fig 2 with dashed lines at 6' and 6'' and in which the actuating member actuates the wheel 3 to its position on the support member and retains the wheel thereon.

The chassis 4 of the carriage comprises two legs 10, 11, which are arranged at a mutual distance to be able to be located in a position, wherein the legs are located on either sides of the wheel 3 of the vehicle. The support member 5 is arranged between the legs 10, 11 as viewed from above and furthermore, the actuating member 6 is arranged to entirely or partially block the interspace between the legs adjacent to the free ends of the legs and thereby prevent exit of the wheel from its position between the legs.

The legs 10, 11 comprise at their extreme ends support wheels 12 for rolling engagement with the ground and are interconnected by means of a transverse beam 13. The support member 5 is in the embodiment pivotably connected to the chassis of the carriage 4, and more specifically its legs 10, 11, about a generally horizontal axis, which in this case is formed by two pivot pins 14 projecting through holes in brackets secured to the support member. The latter is by means of arbitrary stop members, not illustrated, prevented from pivoting clockwise in Fig 1 but on the other hand, the support member may pivot anti-clockwise, which is an advantage if the support member would hit any hindrance, e.g. a threshold, on the ground. In order to obtain a gentle pivoting of the support member upwardly in such a situation, its lower surface should preferably slope downwardly and rearwardly as indicated in Fig 1.

The upper inclined surface 7 of the support member is preferably provided with rifling extending parallel to the direction of inclination, i.e. parallel to the plane of the wheel 3 and these riflings have the purpose to counteract sliding sidewardly of the wheel on the support surface 7.

It is preferred that the actuating member 6 is movable in a generally horizontal plane. The actuating member is preferably pivotable and its pivot axis is denoted 15. The actuating member 6 designed as a roller is freely rotatably journalled but axially undisplacable relative to an axis 16, which in turn is pivotable about axis 15. A sleeve, which rotatably surrounds the axis 15, may e.g. be rigidly secured to axis 16. To this sleeve there is rigidly secured a lever 17, to which one end of the power member 9 is pivotably attached at 18. The other end of power member 9 is pivotably connected at 19 to a bracket relative to the chassis of the carriage. This bracket as well as axis 15 are secured to one leg 10 of the chassis of the carriage. On extensioning of the power member 9 the actuating member 6 will be pivoted from the inactive position illustrated with solid lines in Fig 2 to its active area of movement, in which the actuating member is in engagement with the wheel. It is preferable that the power member 9 is of the type which comprises means controlling the power member to cease its operation as soon as the power member experiences a resistance exceeding a certain predetermined level. Furthermore, it has been found suitable that the power member 9 is of the type comprising a screw-nut device driven by an electric motor, although of course also other types of power members may be used.

At its forward portion, the chassis 4 of the carriage comprises at least one steerable wheel 20. This is connected to a carrier 21 pivotable in the forward part of the chassis about a vertical axis, a steering lever 22 with handle 23 being connected to said carrier. An operator walking on the ground may accordingly hold in the handles 23 and by means of guiding lever 22 rotate carrier 21 and accordingly wheel 20 so that the direction of movement of the carriage may be changed. Furthermore it is preferred that the wheel 20 is driven by a motor, suitably an electrical motor, so that the operator need not produce any movement or transfer forces but only has to steer the carriage in the desired direction. Such a motor may be arranged for driving the wheel 20 in an arbitrary manner known per se, it being particularly suitable to incorporate the motor into the hub of the wheel. The casing like forward part of the chassis comprises portions 24 for accomodating accumulators for delivering electrical current to the current consuming components of the carriage. Support wheels 25 may preferably be arranged on either sides of the forward steerable wheel 20 of the carriage, said support wheel 25 normally being located above the ground but entering into supporting function against the ground on tendency of lateral inclination of the carriage.

It is preferred that the length of the legs 10, 11 is adjustable, e.g. by means of a power member 26. More specifically, the legs 10, 11 may be of a telescoping design with two projectable telescope parts 27, e.g. tubular parts, and two telescope parts 28, e.g. intended to be received within parts 27, secured to the forward chassis part. The power member 26 is preferably of a similar type as that previously described and denoted 9 and has one of its ends acting on a point of attachment relative to the transverse beam 13 between the telescope parts 27 and a point of attachment relative to the forward chassis part of the carriage. By extending and contracting power member 26, the length of the legs 10, 11 may accordingly be varied. This is suitable since the length of legs 10, 11 in order to obtain good manoeuvrability should be as short as possible but nevertheless cars having a large length ahead of the forward wheels may make it necessary to make the legs 10, 11 obtain a large length.

Operating members for controlling the power members 9 and 26 and for controlling the motor driving the wheel 20 are preferably arranged on the steering lever 22.

The support member 5 comprises suitably an upwardly projecting portion 30 adapted to form a stop for the movement of the wheel 3 forwardly on the support member by contacting the wheel.

Since the actuating member 6 describes a pivoting movement, its portion located most closely to the pivot axis 15 will initially enter into contact with the tyre of the wheel 3. Therefore, it is suitable that the portion of the actuating member 6 located most closely to axis 15 tapers in the directions towards axis 15 as indicated at 31. The tapering may suitably take place with a rounded form. To avoid that the wheel 3 of the car slides along the actuating member 6 it is suitable to provide the same with peripherical projections and/or recesses orientated perpendicularly to the axis of rotation of the actuating member. In the embodiment it is indicated that basically projections can be said to be at hand and it is preferred that these projections have flanks, the flanks located closest to the pivot axis 15 sloping away from this pivot axis since thereby a lenient contact with the tyre of the wheel 3 is obtained.

The carriage described functions in the following way: when a car is to be transferred, the carriage is manoeuvred with the actuating member 6 in its inactive position so that a car wheel, preferably a steerable front wheel, becomes located between legs 10 and 11 adjacent to the place denoted 8 of the support member 5. The power member 9 is then activated so that the actuating member 6 is pivoted inwardly between legs 10, 11. The actuating member 6 thereby contacts the tyre of the wheel 3 and presses on the wheel so that it moves up on the inclined surface 7 of the support member 5. When the tyre of the wheel reaches the stop member 30 such a great resistance against additional pivoting of the actuating member 6 is obtained that the operation of power member 9 is interrupted and the power member then maintains the length state achieved so that the actuating member 6 remains in contact with the wheel 3 and in co-operation with support member 5 keeps the same elevated. The rotatable design of the actuating member 6 causes the same to be able to rotate while in contact with the wheel 3. The final position of the actuating member 6 will depend from the actual diameter of the wheel 3; normally, the actuating member 6 will, in the elevated position of the wheel, be located in a position between those denoted 6' and 6'' in Fig 2. The operator may thereafter initiate the driving of wheel 20 so that the carriage, while bringing with it the wheel 3 and accordingly the car, may be moved freely whereas the operator steers and controls the carriage in the desired manner by means of the steering lever 22.

It should be pointed out that if the car 2 would present a greater inertia against movement than the carriage, the lifting operation will primarily proceed so that the contact of the actuating member 6 with the wheel of the car causes the support member 5 to be pushed in under the wheel 3. If the car would tend to roll more easily than the carriage or if the latter would be braked, the operation could also be such that the wheel 3 of the car is actuated to roll up on the inclined surface 7 of the support member by the actuating member 6. A combination of these operations may also occur.

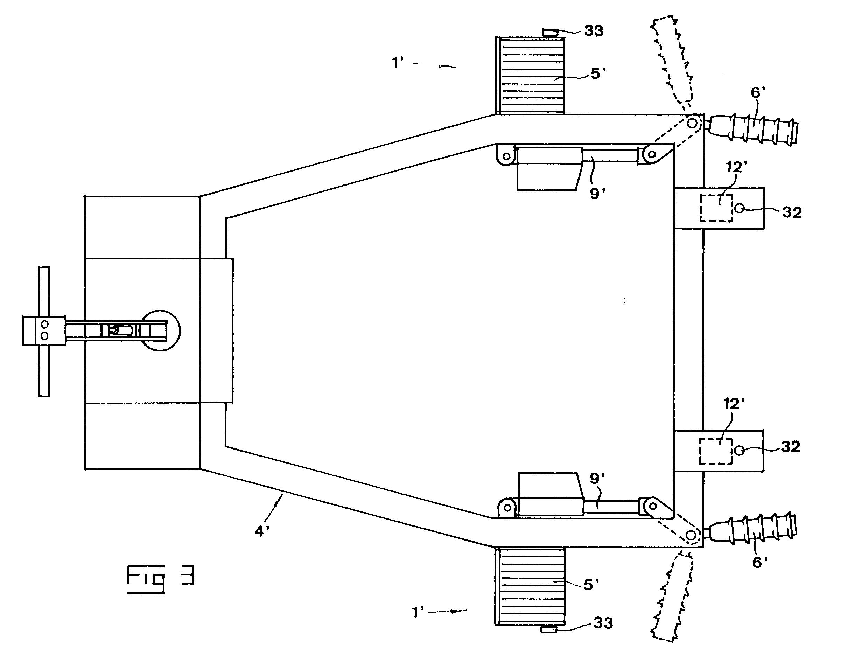

The variant of the carriage illustrated in Fig 3 has the major difference relative to the embodiment described that the engagement device 1' here comprises two support members 5' and two actuating members 6' operated by power members 9' and adapted for simultaneous elevating co-operation with two wheels, preferably the two steerable front wheels, of the car or vehicle in question. The entire forward portion of the vehicle is accordingly intended to be elevated. The chassis 4 of the carriage has in this case for natural reasons a different and wider structure and the support members 5' projects sidewardly from the chassis 4'. Furthermore, it is suitable that the rear support wheels 12' are freely pivotably journalled about axes 32. The support members 5' may be rigidly secured to the chassis 4' or as in the previous embodiment pivotable about shafts analogous to the one denoted 14 in Figs 1 and 2. In both cases it may be suitable to arrange supporting wheels 33 on the support members 5', said supporting wheels being intended to enter into contact with the ground for supporting purposes if there would be a tendency to lateral inclination of the chassis 4. Alternatively, also these support wheels 33 could roll permanently on the ground if so desired.

The carriage described involves the major advantage that the lifting of the wheel in question of the vehicle occurs extremely efficiently with a small power requirement due to the design of the support members 5, 5' with the inclined upper surface 7.

As appears from Fig 1, the device is so designed that the contact surface of the actuating member 6, in the elevated state of the wheel 3, relative to the wheel is located at a higher level than the contact surface of the support member 5 relative to the wheel. In other words, a vertical plane extending through the centre C of the wheel and parallel to its centre axis will, in the elevated state of the wheel 3, be located more closely to the contact surface of the support member 5 relative to the wheel than the contact surface of the actuating member 6 relative to the wheel. Accordingly, the consequence is that the support member 5 and actuating member 6 are so mutually arranged that in the elevated state of the wheel, the main part of its weight and the main part of the load of the vehicle acting on the wheel will be assumed by the support member 5. In other words, the actuating member 6 will in the elevated state of the wheel be subjected to a relatively small proportion of the gravity of the wheel and vehicle so that the actuating member 6 generally will fulfil the task to prevent the wheel from rolling down from the support member 5. The part of the inclined support surface 7 located most closely to the ground is accordingly situated under the portion of the actuating member 6 intended for contact with the wheel or object 3 so that the object with a relatively small power requirement may be rolled up onto the support surface. The inclination of the support surface is not more than 45° relative to a horizontal plane, suitably smaller than 30° and preferably smaller than 25°.

The carriage described may of course be modified in several ways in relation to the variants described. In these variants the actuating members 6, 6' are intended to actively take part in maintaining vehicle wheels elevated. However, it would be conceivable to modify the support member 5 so that the vehicle wheels entirely or almost entirely are maintained elevated thereby during transfer by means of the carriage so that accordingly the actuating members during such transfer will not be subjected to any strains at all or possibly only small strains. Finally, it should be pointed out that it would be possible to modify the variants described so that the actuating member 6, 6' would be arranged to assume one and the same active position during the lifting operation and instead, the support member 5 with its inclined upper surface 7 could be designed movable relative to the chassis of the carriage so that the support member would be pushed in under the vehicle wheel whereas the latter would be abutting against the actuating member, which would be stationary apart from its possible rotational ability. In such a design, the actuating member would primarily have the character of abutment against the wheel. Also other modifications of the carriage are possible within the scope of the invention.

It is specifically pointed out that if the vehicle to be lifted by means of the carriage in Figs 1 and 2 have two steerable wheels arranged in parallel and one of these wheels is lifted by means of the carriage, steering movements of the carriage will be transferred to the other steerable wheel rolling against the ground via the lifted wheel and the steering mechanism of the vehicle. Accordingly, the steering movements of the vehicle will be limited to the steering ability (turning radius) of the vehicle, a condition being that the vehicle is so arranged that its steering movements are transferred to the lifted vehicle wheel. On the contrary, in the embodiment according to Fig 3 elevation of two wheels of the vehicle will cause its forward (or alternatively rear) end to be entirely elevated and accordingly, the steering movement of the carriage will not be limited by the steering mechanism of the vehicle.

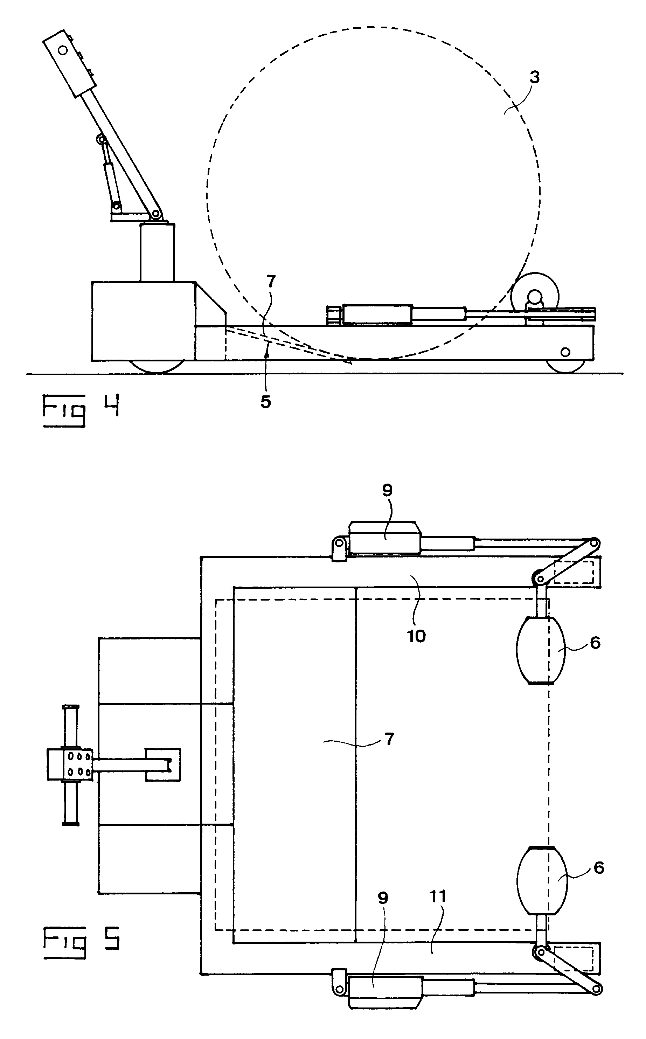

The carriage variant illustrated in Figs 4 and 5 is intended for transfer of other round objects, e.g. paper rolls, than vehicle wheels and associated vehicles. The carriage according to Figs 4 and 5 corresponds in its main features with the carriage already described and only the main differences will be mentioned herein. As previously, the carriage comprises two legs 10, 11, which are arranged at a mutual distance and between which the paper roll or object is intended to be received. The distance between the legs is here greater and adjusted to the length of the object. As previously, the carriage comprises a support member 5 having an upper support surface forming an inclined plane 7. In this variant, two actuating members 6 are pivotably arranged by means of power members 9 for actuating the paper roll to roll up onto the inclined plane 7. Each of the legs 10, 11 comprises an actuating member pivotably journalled at the extreme end thereof, said actuating member being connected to a lever in turn connected to the respective power members.

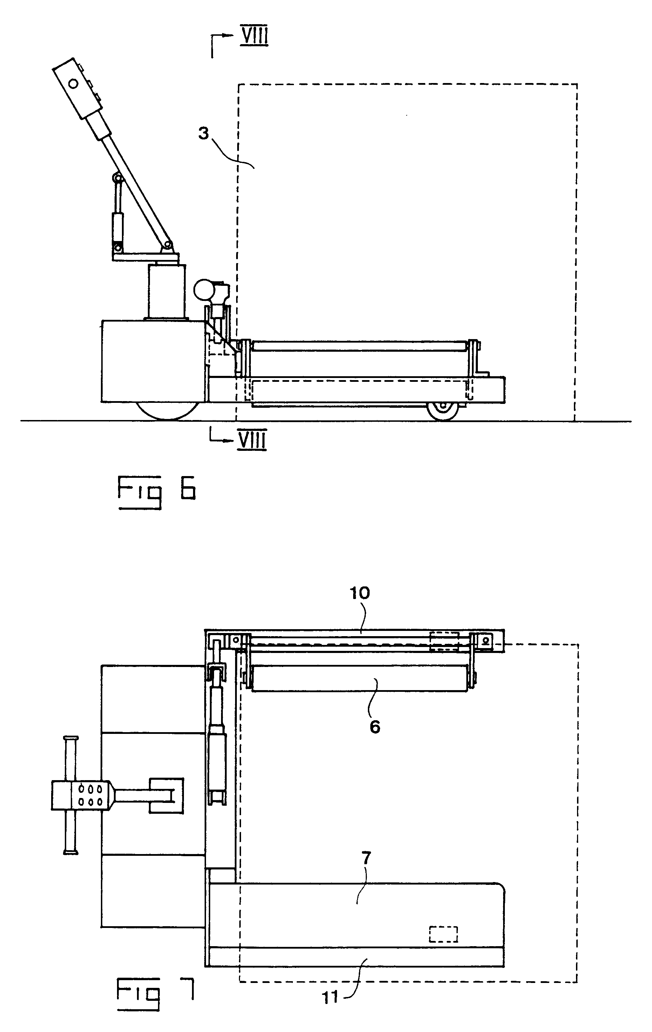

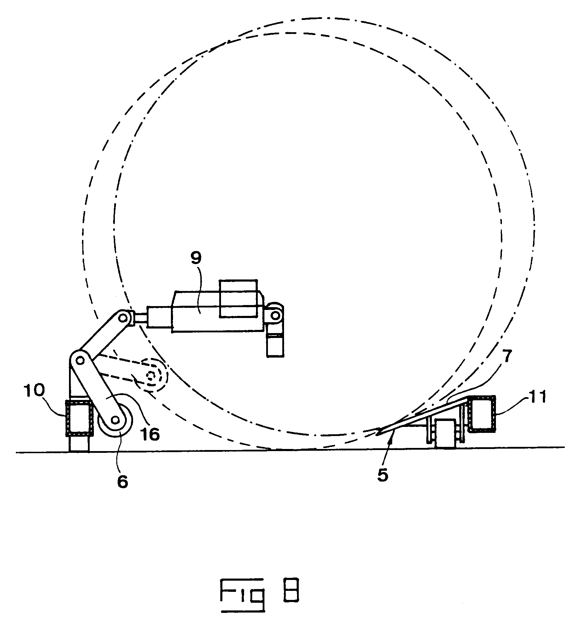

In the embodiments previously described, the objects or wheels have been received between the legs of the carriage so that the axes of the objects or wheels extend generally perpendicularly to the legs. In the variant in Figs 6-8 and also intended for round objects in the form of e.g. paper rolls, the paper roll is adapted to be received between the spaced legs 10, 11 of the carriage with the roll axis generally parallel to the longitudinal direction of these legs. Also here there is a support member 5 having a support surface 7 forming an inclined plane and this support member 5 extends along one leg 11 of the carriage. On the other leg 10 of the carriage an actuating member 6, here designed as an elongated roller, is movably arranged between the positions indicated in solid and in dashed lines by means of a power member 9. More specifically, the actuating member is arranged at the extreme end of pivoting arms 16. As appears from Fig 7, the actuating member 6 is elongated and it extends generally parallel to leg 10.

With the actuating member 6 in the position illustrated with solid lines according to Fig 8, the carriage can be located with its legs 10, 11 on either sides of the round object. By pivoting the actuating member 6 towards the dashed position by means of the power member 9, the object is displaced by rolling up onto the inclined support surface 7. During this rolling, the relative direction of displacement between the object and the carriage is directed generally transversely to the longitudinal directions of the legs 10, 11, whereas in the previous embodiments the corresponding relative direction of displacement was generally parallel to the legs of the carriage.

## Claims

1. Steerable carriage for transferring round objects, comprising a device (1) for establishing a propulsion force transmitting engagement between the carriage and object (3), said engagement device being adapted to engage with and elevate the object (3) from the ground, said carriage being adapted to transmit, on displacement thereof, propulsion force to the object (3) via the engagement device (1), the engagement device (1) comprising at least one support member (5) and at least one actuating member (6), which are arranged relatively movable in order to co-operate to cause the object (3) and the support member (5) to assume a relative position, in which the object is located at least partly on the support member and at least partly supported thereby, the support member (5) having an upper support surface (7) intended for contact with the object (3), *characterised* in that the support surface (7) slopes upwardly from a place relatively close to the ground and forms an inclined plane, and that the actuating member (6) is adapted to actuate the object (3) to roll upwardly on the inclined plane (7).

2. A carriage according to claim 1, *characterised* in that the actuating member (6) is adapted to prevent the object (3) from leaving its position on the support member during transfer of the carriage.

3. A carriage according to any of claims 1-2, *characterised* in that the actuating member (6) comprises a rotatably journalled roller.

4. A carriage according to any of claims 1-3, *characterised* in that the actuating member (6) is pivotably journalled on the carriage.

5. A carriage according to claim 4, *characterised* in that the actuating member (6) is pivotable in a generally horizontal plane.

6. A carriage according to any of claims 1-5, *characterised* in that the actuating member (6) is movable, by means of a power member (9), from an inactive position, in which the actuating member allows the object and support member to be located close to each other with the peripherical surface of the object adjacent to the support member, into an active area of movement, in which the actuating member actuates the object to its position on the support member and maintains the object thereon.

7. A carriage according to any of the claims 1-6, *characterised* in that the chassis of the carriage comprises two legs (10, 11), which are arranged at a mutual distance to be located in a position, wherein the legs are located on either sides of the object (3), that the support member (5) is arranged between the legs and that the actuating member (6) is adapted to entirely or partly block the inter-space between the legs adjacent to the free ends of the legs and thereby prevent exit of the object from its position between the legs.

8. A carriage according to any of the preceding claim, *characterised* in that the contact area of the actuating member (6) relative to the object (3) is located, in the elevated stage of the object, at a higher level than the area of contact of the support member relative to the object.

9. A carriage according to any preceding claim, *characterised* in that a vertical plane through the centre of the object and parallel to its centre axis is located, in the elevated stage of the object, more closely to the contact area of the support member relative to the object that the contact area of the actuating member relative to the object.

10. A carriage according to any preceding claim, *characterised* in that the support member and actuating member are so arranged relative to each other that the main portion of the weight of the object is assumed, in the elevated state of the object, by the supporting member.

11. A carriage according to any preceding claim, *characterised* in that the object is formed by a wheel (3) of a vehicle and that the carriage is adapted to transmit, on displacement of the carriage, propulsion force to the vehicle via the engagement device (1) and via said at least one elevated wheel of the vehicle.

12. A carriage according to any preceding claim, *characterised* in that its engagement device (1') comprises two support members (5') and two actuating members (6') for simultaneous lifting co-operation with two objects in the form of two wheels of a vehicle.

13. A carriage according to claims 1 and 11, *characterised* in that a chassis (4) of the carriage comprises at least one steerable wheel (20) at its forward portion, that the chassis comprises legs (10, 11) extending between the forward portion of the chassis (4) and the engagement device (1), and that the length of said legs is adjustable in order to enable lengthening and shortening respectively of the distance between the forward portion of the chassis (4) and the engagement device (1).

14. A carriage according to claim 13, *characterised* in that the legs (10, 11) are of a telescoping design.

15. A carriage according to claim 14, *characterised* in that a power member (26) variable in length acts between the telescope parts (27, 28) of the legs (10, 11).

## Patentansprüche

1. Steuerbarer Wagen zum Transport von runden Gegenständen, der eine Einrichtung (1) zum Ausüben einer Vortriebskraft aufweist, die das Kuppeln zwischen dem Wagen und einem Gegenstand (3) überträgt, wobei diese Kupplungseinrichtung angepaßt ist, um mit dem Gegenstand zu kuppeln und den Gegenstand (3) vom Boden anzuheben, der Wagen angepaßt ist, um bei einer Verschiebung desselben die Vortriebskraft über die Kupplungseinrichtung auf den Gegenstand zu übertragen, die Kupplungseinrichtung (1) mindestens ein Stützelement (5) und mindestens ein Betätigungsorgan (6) aufweist, die zueinander beweglich sind um zusammenarbeitend dazu zu dienen, daß der Gegenstand (3) und das Stützelement (5) eine relative Position zueinander einnehmen, in der der Gegenstand wenigstens zum Teil auf dem Stützelement angeordnet und wenigstens zum Teil durch dieses gestützt wird, und das Stützelement eine obere Stützfläche (7) für den Kontakt mit dem Gegenstand (3) aufweist, dadurch gekennzeichnet, daß die Stützfläche (7) sich von einer Stelle relativ nahe des Bodens schräg nach oben erstreckt und eine schiefe Ebene bildet, und daß das Betätigungsorgan (6) ausgebildet ist, um den Gegenstand auf der schiefen Ebene (7) aufwärts zu rollen.

2. Wagen nach Anspruch 1, dadurch gekennzeichnet, daß das Betätigungsorgan (6) ausgebildet ist, um zu verhindern, daß der Gegenstand (3) seine Position auf dem Stützelement (5) während des Transports des Wagens verläßt.

3. Wagen nach einem der Ansprüche 1 bis 2, dadurch gekennzeichnet, daß das Betätigungsorgan (6) eine drehbar auf einer Achse gelagerte Rolle aufweist.

4. Wagen nach einem der Ansprüche 1 bis 4, dadurch gekennzeichnet, daß das Betätigungsorgan (6) auf dem Wagen auf einer Achse schwenkbar gelagert ist.

5. Wagen nach Anspruch 5, dadurch gekennzeichnet, daß das Betätigungsorgan (6) in einer im wesentlichen horizontalen Ebene schwenkbar ist.

6. Wagen nach einem der Ansprüche 1 bis 5, dadurch gekennzeichnet, daß das Betätigungsorgan (6) durch eine Kraftglied-Einrichtung (9) von einer inaktiven Position, in der das Betätigungsorgan dem Gegenstand und dem Stützelement erlaubt nahe zu einander und mit der Umfangsfläche des Gegenstandes nahe dem Stützelement angeordnet zu sein, in eine aktive Position bewegbar ist, in der das Betätigungsorgan den Gegenstand in seine Position auf das Stützelement bewegt und den Gegenstand darauf hält.

7. Wagen nach einem der Ansprüche 1 bis 6, dadurch gekennzeichnet, daß das Chassis des Wagens zwei Schenkel (10, 11) aufweist, die in einem gegenseitigen Abstand voneinander angeordnet sind, in dem die Schenkel auf beiden Seiten des Gegenstandes angeordnet sind, daß das Stützelement (5) zwischen den Schenkeln angeordnet ist und daß das Betätigungsorgan (6) ausgebildet ist, um den Zwischenraum zwischen den Schenkeln im Bereich der freien Enden der Schenkel ganz oder teilweise blockiert und dadurch den Gegenstand am Austreten aus seiner Position zwischen den Schenkeln hindert.

8. Wagen nach einem der vorhergehenden Ansprüche, dadurch gekennzeichnet, daß der Kontaktbereich zwischen dem Betätigungsorgan (6) und dem Gegenstand (3) im angehobenen Zustand des Gegenstandes höher zu liegen kommt, als der Kontaktbereich zwischen dem Stützelement und dem Gegenstand.

9. Wagen nach einem der vorhergehenden Ansprüche, dadurch gekennzeichnet, daß eine vertikale Ebene durch das Zentrum des Gegenstandes und parallel zu seiner zentrischen Achse im angehobenen Zustand des Gegenstandes näher an dem Kontaktbereich zwischen dem Stützelement und dem Gegenstand ist, als an dem Kontaktbereich zwischen dem Betätigungsorgan und dem Gegenstand.

10. Wagen nach einem der vorhergehenden Ansprüche, dadurch gekennzeichnet, daß das Stützelement und das Betätigungsorgan relativ so zu einander angeordnet sind, daß das Hauptgewicht des angehobenen Gegenstandes von dem Stützelement aufgenommen wird.

11. Wagen nach einem der vorhergehenden Ansprüche, dadurch gekennzeichnet, daß der Gegenstand durch ein Rad (3) eines Fahrzeuges gebildet wird, und daß der Wagen ausgebildet ist, beim Verschieben des Wagens über die Kupplungseinrichtung und über das wenigstens eine angehobene Rad des Fahrzeuges auf dieses eine Vortriebskraft auszuüben.

12. Wagen nach einem der vorhergehenden Ansprüche, dadurch gekennzeichnet, daß die Kupplungseinrichtung (1') zwei Stützelemente (5') und zwei Betätigungsorgane (6') für das simultane zusammenarbeitende Anheben von zwei Gegenständen in der Form von zwei Rädern eines Fahrzeuges aufweist.

13. Wagen nach Anspruch 1 und 11, dadurch gekennzeichnet, daß das Chassis (4) des Wagens mindestens ein steuerbares Rad (20) an seinem vorderen Teil aufweist, daß das Chassis Schenkel (10, 11) aufweist, die sich zwischen dem vorderen Teil des Chassis (4) und der Kupplungseinrichtung (1) erstrecken, und daß die Länge dieser Schenkel einstellbar ist, um das Verlängern oder Verkürzen des Abstandes zwischen dem vorderen Teil des Chassis (4) und der Kupplungseinrichtung (1) zu ermöglichen.

14. Wagen nach Anspruch 13, dadurch gekennzeichnet, daß die Schenkel (10, 11) teleskopartig ausgebildet sind.

15. Wagen nach Anspruch 14, dadurch gekennzeichnet, daß ein in der Länge variables Kraftglied (26) zwischen den teleskopischen Teilen (27, 28) der Schenkel (10, 11) wirkt.

## Revendications

1. Chariot dirigeable pour le transfert ou déplacement d'objets ronds, comprenant un élément (1) susceptible d'établir un engagement à transmission de force propulsive entre le chariot et l'objet (3), ledit élément d'engagement étant conçu pour s'engager avec et élever l'objet (3) depuis le sol, ledit chariot étant conçu pour transmettre, lors de son déplacement, une force de propulsion à l'objet (3) via l'élément d'engagement (1), l'élément d'engagement (1) comprenant au moins un organe support (5) et au moins un organe d'actionnement (6), qui sont agencés de manière déplaçable relativement afin de coopérer pour provoquer la mise en position relative de l'objet (3) et de l'organe support (5), dans laquelle l'objet est disposé au moins partiellement sur l'organe support et au moins partiellement supporté par ce dernier, l'organe support (5) ayant une surface de support supérieure (7) destinée au contact avec l'objet (3), caractérisé en ce que la surface de support (7) est en pente vers le haut depuis une zone relativement proche du sol et forme un plan incliné, et en ce que l'organe d'actionnement (6) est conçu pour agir sur l'objet (3) en vue de rouler ce dernier vers le haut sur le plan incliné (7).

2. Chariot selon la revendication 1, caractérisé en ce que l'organe d'actionnement (6) est conçu pour empêcher l'objet (3) de quitter sa position sur l'organe support lors du transfert ou déplacement du chariot.

3. Chariot selon l'une des revendications 1 ou 2, caractérisé en ce que l'organe d'actionnement comprend un galet monté rotatif.

4. Chariot selon l'une des revendications 1 à 3, caractérisé en ce que l'organe d'actionnement (6) est monté pivotant sur le chariot.

5. Chariot selon la revendication 4, caractérisé en ce que l'organe d'actionnement est monté pivotant selon un plan sensiblement horizontal.

6. Chariot selon l'une des revendications 1 à 5, caractérisé en ce que l'organe d'actionnement (6) est déplaçable au moyen d'un organe de puissance (9) depuis une position inactive, dans laquelle l'organe d'actionnement permet à l'objet et à l'organe de support d'être disposés proche l'un de l'autre avec la surface périphérique de l'objet adjacente à l'organe de support, vers une zone active de déplacement, dans laquelle l'organe d'actionnement agit sur l'objet pour l'amener vers sa position sur l'organe support et maintient l'objet sur ce dernier.

7. Chariot selon l'une des revendications 1 à 6, caractérisé en ce que le châssis du chariot comprend deux longerons (10,11), qui sont disposés à une distance mutuelle en vue d'être placés dans une position dans laquelle les longerons sont disposés de chaque côté de l'objet (3), en ce que l'organe support (5) est disposé entre les longerons et en ce que l'organe d'actionnement (6) est conçu pour bloquer entièrement ou en partie l'espace entre les longerons adjacent aux extrémités libres des longerons et ainsi empêcher l'objet de quitter sa position entre les longerons.

8. Chariot selon l'une des revendications précédentes, caractérisé en ce que la zone de contact de l'organe d'actionnement (6) par rapport à l'objet (3) est disposée en position élevée de l'objet, à un niveau supérieur par rapport à la zone de contact de l'organe de support par rapport à l'objet.

9. Chariot selon l'une des revendications précédentes, caractérisé en ce qu'un plan vertical passant par le centre de l'objet et parallèle à son axe central est disposé, en position élevée de l'objet, plus près de la zone de contact de l'organe de support par rapport à l'objet que la zone de contact de l'organe d'actionnement par rapport à l'objet.

10. Chariot selon l'une des revendications précédentes, caractérisé en ce que l'organe support et l'organe d'actionnement sont disposés l'un par rapport à l'autre de manière que la partie principale du poids de l'objet est supportée, en position élevée de l'objet, par l'organe de support.

11. Chariot selon l'une des revendications précédentes, caractérisé en ce que l'objet est constitué par une roue (3) d'un véhicule et en ce que le chariot est adapté pour transmettre, lors du déplacement du chariot, une force de propulsion au véhicule, via l'élément d'engagement (1) et via l'une au moins des roues soulevées du véhicule.

12. Chariot selon l'une des revendications précédentes, caractérisé en ce que son élément d'engagement (1') comprend deux organes support (5') et deux organes d'actionnement (6') pour soulever simultanément en coopération deux objets sous la forme de deux roues d'un véhicule.

13. Chariot selon les revendications 1 et 11, caractérisé en ce qu'un châssis (4) du chariot comprend au moins une roue dirigeable (2) en sa partie avant, en ce que le châssis comprend des longerons (10,11) s'étendant entre la partie avant du châssis (4) et l'élément d'engagement (1), et en ce que la longueur desdits longerons est réglable en vue de permettre l'augmentation ou le raccourcissement respectivement de la distance entre la partie avant du châssis (4) et de l'élément d'engagement (1).

14. Chariot selon la revendication 13, caractérisé en ce que les longerons (10,11) sont conçus de manière télescopique.

15. Chariot selon la revendication 14, caractérisé en ce qu'un organe de puissance (26) variable en longueur, agit entre les parties télescopiques (27,28) des longerons (10,11).
